(19) Europäisches Patentamt
European Patent Office
Office européen des brevets

(11) **EP 4 697 438 A1**

(12) **EUROPEAN PATENT APPLICATION**
published in accordance with Art. 153(4) EPC

(43) Date of publication:
**18.02.2026 Bulletin 2026/08**

(21) Application number: **24863263.0**

(22) Date of filing: **06.09.2024**

(51) International Patent Classification (IPC):
**H01M 10/0587** (2010.01)    **H01M 4/525** (2010.01)
**H01M 4/505** (2010.01)    **H01M 4/131** (2010.01)
**H01M 4/36** (2006.01)    **H01M 4/587** (2010.01)
**H01M 4/485** (2010.01)    **H01M 10/052** (2010.01)
**H01M 10/04** (2006.01)

(52) Cooperative Patent Classification (CPC):
**H01M 10/0525; H01M 4/131; H01M 4/1391;
H01M 4/386; H01M 4/525; H01M 10/0431;
H01M 10/0587; H01M 50/107; H01M 50/186;
Y02E 60/10; Y02P 70/50**

(86) International application number:
**PCT/KR2024/013527**

(87) International publication number:
**WO 2025/053684 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 KR 20230119329
21.06.2024 KR 20240081471**

(71) Applicant: **LG Energy Solution, Ltd.
Seoul 07335 (KR)**

(72) Inventors:
• **KANG, Hyo Seok
Daejeon 34122 (KR)**
• **KIM, Do Hyeong
Daejeon 34122 (KR)**
• **JANG, Seol Heui
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ELECTRODE ASSEMBLY AND CYLINDRICAL LITHIUM SECONDARY BATTERY COMPRISING SAME**

(57) The present invention provides an electrode assembly in which: a positive electrode including a positive electrode current collector and a positive electrode active material layer positioned on the positive electrode current collector; a negative electrode; and a separator interposed between the positive electrode and the negative electrode are wound in one direction, wherein Y defined by Equation (1) is less than 0.38. Equation (1): $Y = c \times D / d$, wherein, in Equation (1), c is the curvature of a hollow part surrounded by the wound electrode assembly, D is the average particle diameter $D_{50}$ ($\mu$m) of positive electrode active material particles included in the positive electrode active material layer, and d is the thickness ($\mu$m) of the positive electrode current collector.

[FIG. 1]

**Description**

## TECHNICAL FIELD

## CROSS-REFERENCE TO RELATED APPLICATIONS

This application is based on and claims priority from Korean Patent Application Nos. 10-2023-0119329, filed on September 7, 2023, and 10-2024-0081471, filed on June 21, 2024, with the Korean Intellectual Property Office, the disclosure of which is incorporated herein in its entirety by reference.

## TECHNICAL FIELD

The present disclosure relates to an electrode assembly and a cylindrical lithium secondary battery including the same.

## BACKGROUND ART

Lithium secondary batteries have attracted much attention due to their various advantages, including high capacity, long life, stability, durability, and reliability, and the demand for lithium secondary batteries as an energy source is increasing rapidly with the development of electric vehicles, portable electronic devices, and other technologies. In particular, with the recent advancement of electric vehicle technology, high-energy density batteries are required to improve the average vehicle driving distance on a single charge.

## DISCLOSURE OF THE INVENTION

## TECHNICAL PROBLEM

The present disclosure provides a cylindrical lithium secondary battery having a high energy density by making the curvature of a hollow portion surrounded by a wound electrode assembly including a high-loading positive electrode, the average particle diameter $D_{50}$ of a positive electrode active material, and the thickness of a positive electrode current collector, satisfy specific relationships, while preventing cracks from occurring in the core during winding of the electrode assembly for the cylindrical lithium secondary battery.

## TECHNICAL SOLUTION

The present disclosure provides an electrode assembly including a positive electrode including a positive electrode current collector and a positive electrode active material layer positioned on the positive electrode current collector; a negative electrode; and a separator interposed between the positive electrode and the negative electrode, in which the positive electrode, the negative electrode, and the separator are wound in one direction, and Y is less than 0.38, as defined by Equation (1):

$$Y = c \times D / d \qquad (1)$$

In Equation (1), c is a curvature of a hollow portion surrounded by the wound electrode assembly, D is an average particle diameter $D_{50}$ ($\mu$m) of positive electrode active material particles included in the positive electrode active material layer, and d is a thickness ($\mu$m) of the positive electrode current collector.

Further, the present disclosure provides a cylindrical lithium secondary battery including the above-described electrode assembly, a battery can in which the electrode assembly is accommodated, an electrolyte poured into the battery can, and a sealing body configured to seal an open end of the battery can.

## ADVANTAGESOUS EFFECTS

The electrode assembly of the present disclosure may provide a cylindrical lithium secondary battery having high energy density. In the cylindrical lithium secondary battery which accommodates the electrode assembly in a battery can that hardly expands, when the loading amount of the positive electrode increases, the hollow space corresponding to the empty space becomes narrower, and the curvature of the hollow space surrounded by the wound electrode assembly increases, which increases the probability of cracks occurring in the electrode current collector during winding of the electrode assembly.

In addition, in the cylindrical lithium secondary battery which accommodates the electrode assembly in a battery can that hardly expands, when the loading amount of the positive electrode increases, the thickness of the electrode assembly decreases because the space is insufficient as the loading amount increases, which increases the probability of cracks occurring in the electrode current collector during winding of the electrode assembly.

The electrode assembly of the present disclosure has a high energy density while improving the cracking of the electrode current collector during winding of the electrode assembly, by adjusting the average particle diameter $D_{50}$, the curvature of the hollow portion and the thickness of the positive electrode current collector, to be in an appropriate ratio to improve the dimpling of the current collector by the positive electrode active material. Even when the thickness of the current collector is reduced and the core radius is reduced to increase the energy density of the positive electrode in the cylindrical lithium secondary battery, cracks may not occur in the electrode current collector during winding of the electrode assembly.

## BRIEF DESCRIPTION OF THE DRAWINGS

The following drawings attached hereto exemplify embodiments of the present disclosure and serve to further understand the technical idea of the present disclosure together with the detailed description of the disclosure to be described later. Therefore, the present disclosure should not be construed as being limited to the matters illustrated in the drawings.

FIG. 1 is a view illustrating the structure of a cylindrical lithium secondary battery according to an embodiment of the present disclosure.
FIG. 2 is a view illustrating the configuration of a positive electrode of the cylindrical lithium secondary battery according to an embodiment of the present disclosure.
FIG. 3 is a flowchart for manufacturing an electrode assembly of the cylindrical lithium secondary battery according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

## MODE FOR CARRYING OUT THE INVENTION

In the following detailed description, reference is made to the accompanying drawings which form a part hereof. The illustrative embodiments described in the detailed description, drawings, and claims are not meant to be limiting. Other embodiments may be utilized, and other changes may be made without departing from the spirit or scope of the subject matter presented herein.

As used herein, a "primary particle" means a particle unit that has no apparent particle boundary when observed at a field of view of 5,000x to 20,000x using a scanning electron microscope. An "average particle size of primary particles" refers to the arithmetic mean value calculated after measuring the particle sizes of the primary particles observed in scanning electron microscope images.

As used herein, a "secondary particle" is a particle formed by the agglomeration of a plurality of primary particles. To distinguish from conventional secondary particles formed by aggregation of tens to hundreds of primary particles, secondary particles formed by aggregation of 10 or fewer primary particles will be referred to herein as pseudo-unitary particles.

As used herein, an "average particle diameter $D_{50}$" refers to a particle size at 50% of the volume-accumulated particle size distribution of the positive electrode active material powder, which may be measured using a laser diffraction method. For example, the average particle diameter $D_{50}$ may be measured by dispersing the positive electrode active material powder in a dispersant, introducing the dispersion into a commercially available laser diffraction particle size measurement device (e.g., Microtrac MT 3000), irradiating the dispersion with ultrasonic waves of about 28 kHz at a power of 60 W, obtaining a volume accumulation particle size distribution graph, and then finding the particle size corresponding to 50% of the volume accumulation.

Lithium secondary batteries may be classified into cylindrical, square, and pouch-type batteries depending on the shape of the battery case. Among these, cylindrical batteries are manufactured by sequentially stacking sheet-shaped positive electrodes, separators, and negative electrodes on a cylindrical battery can, winding them in one direction to form an electrode assembly, and then accommodating the electrode assembly, which is then sealed by covering the top of the battery can with a cap plate.

In order to improve the energy density of the cylindrical battery, the amount of active material included in the electrode assembly must be increased to improve space utilization within the limited can. However, when the loading amount of the electrode is increased to implement a cylindrical lithium secondary battery with high energy density, there is a problem that cracks occur in the electrode current collector located at the center when performing the winding process of the electrode assembly. When the cracks become severe, there is additional problem that the electrode current collector within the wound electrode assembly breaks.

The present disclosure provides a cylindrical lithium secondary battery with improved energy density by considering the curvature of a hollow portion surrounded by a wound electrode assembly, the average particle diameter $D_{50}$ of positive electrode active material particles, the thickness of a positive electrode current collector, and the like, in the electrode assembly including a high loading of a positive electrode.

Hereinafter, the present disclosure is described with reference to the accompanying drawings.

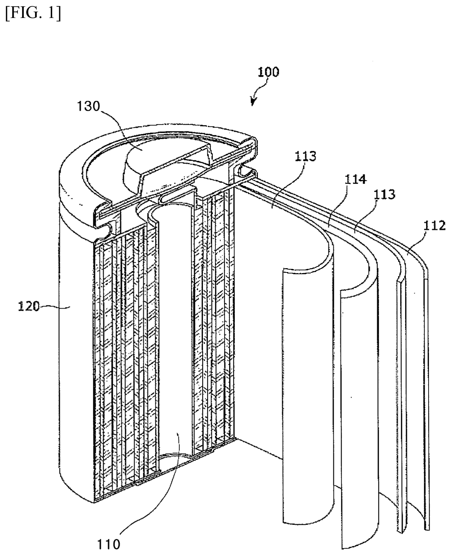

Referring to FIG. 1, a cylindrical lithium secondary battery 100 according to an embodiment of the present disclosure is manufactured in a cylindrical shape by rolling up a structure in which a negative electrode 112, a separator 113, and a positive electrode 114 are sequentially stacked on a cylindrical hollow portion (core cylinder) 110. The jelly roll manufactured in this manner is placed in an aluminum can 120, and an electrolyte is injected in a state where only one side of the can 120 is sealed with a sealing body 130 by a method such as welding. Then, the other side of the can 120 is also sealed with a sealing body 130 to complete a cylindrical lithium secondary battery 100.

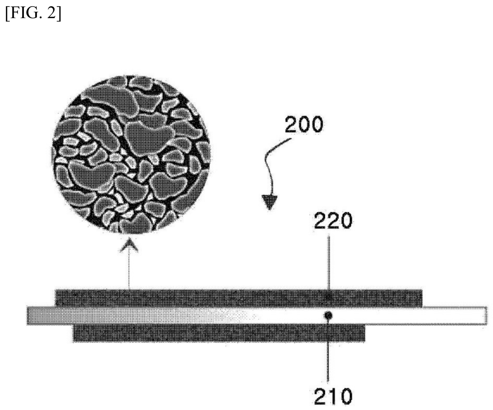

Referring to FIG. 2, the positive electrode 114 of the cylindrical lithium secondary battery 100 according to an embodiment of the present disclosure has a layer structure 116 in which a composite containing an active material, a conductive material, a binder, and the like, is coated either on one side or both sides of a current collector 115 such as aluminum.

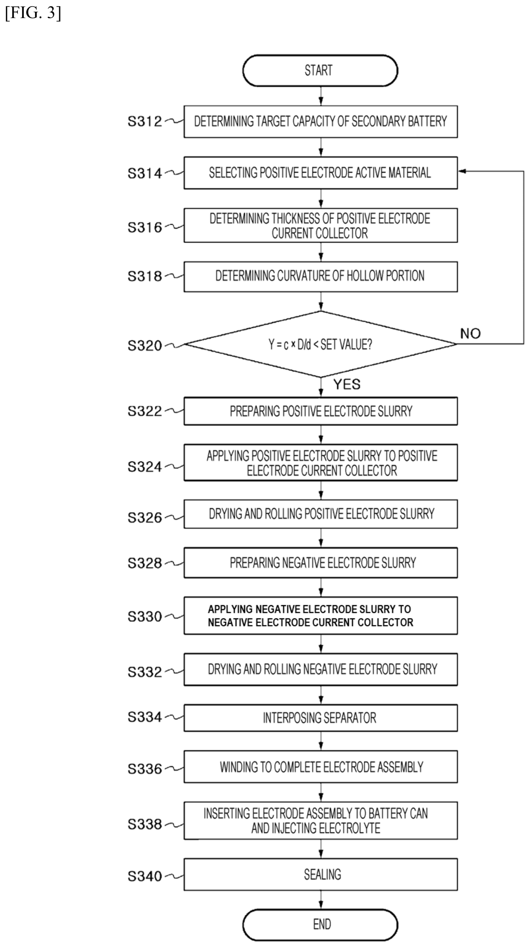

FIG. 3 is a flowchart for manufacturing a high-loading cylindrical lithium secondary battery 100 according to an embodiment of the present disclosure.

First, a target capacity of the cylindrical secondary battery 100 requiring high loading is determined (S312), and a positive electrode active material having an average particle diameter ($D_{50}$) that satisfies the high loading is selected (S314). Next, a thickness d of the positive electrode current collector 115 that satisfies the high loading condition is determined (S316), and the radius and curvature c of the hollow portion 110 are determined (S318).

Next, it is checked whether the "Y = c×D/d" value for the determined parameters fall within the set value range (S320). When the "Y = c x D / d" value for the determined parameters does not fall within the set value range, the process returns to the previous process, for example, S314, and repeats the process until the value falls within the set value range.

Next, a positive electrode slurry is prepared by mixing the selected positive electrode active material, conductive agent, and binder (S322). Then, the prepared positive electrode slurry is applied to the positive electrode current collector 115 (S324), which is then dried and rolled (S326) to prepare a positive electrode 114.

Meanwhile, a negative electrode 112 is manufactured subsequent to the above process or separately from the above process. For example, a negative electrode slurry is manufactured by mixing a negative electrode active material, a conductive agent, and a binder (S328), the manufactured negative electrode slurry is applied to a negative electrode current collector (S330), which is then dried and rolled (S332) to prepare a negative electrode. Thereafter, a separator 113 is interposed between the manufactured positive electrode 114 and negative electrode 112 (S334), and the positive electrode 114, separator 113, and negative electrode 112 are wound (S336) to complete a jelly-roll type electrode assembly of a cylindrical lithium secondary battery 100.

Next, the jellyroll-type electrode assembly is inserted into a battery can 120, an electrolyte is added (S338), and the battery can is sealed (S340) to complete the cylindrical lithium secondary battery 100.

Meanwhile, the process sequences of the process flowchart described above may be appropriately changed according to needs and circumstances. For example, the process S314 for selecting the positive electrode active material 116, the process S316 for determining the thickness of the positive electrode current collector 115, and the process S318 for determining the radius and curvature of the hollow portion 120 may be performed in any order.

The electrode assembly according to an embodiment of the present disclosure includes: a positive electrode 114 including a positive electrode current collector 115 and a positive electrode active material layer 116 positioned on the positive electrode current collector 115; a negative electrode 112; and a separator 113 interposed between the positive electrode 114 and the negative electrode 112, in which the positive electrode 114, the negative electrode 112, and the separator 113 are wound in one direction, and Y is less than 0.38, as defined by Equation (1).

$$Y = c \times D / d \qquad (1)$$

Y may be 0.01 to 0.3, or 0.1 to 0.2.

In Equation (1), c is a curvature (mm$^{-1}$) of the hollow portion 110 surrounded by the wound electrode assembly, and is defined as a reciprocal of the radius (mm) of the bottom surface of the hollow portion 110 formed in a cylindrical shape inside the electrode assembly. For example, the radius of the hollow portion 110 may be confirmed by scanning the hollow portion 110 of the electrode assembly in a direction parallel to the bottom surface of the electrode assembly and perpendicular to the axial direction of the electrode assembly using "computerized tomography (CT)" equipment. The distance of the electrode assembly pattern located at the innermost angle in the cross-section of the scanned hollow portion 110 is measured, and the average value of the longest major axis and the shortest minor axis is calculated to find the length of the radius of the bottom surface of the hollow portion 110. This is the same as the length of the radius of the core used in manufacturing the electrode assembly.

In an embodiment, c may be 0.4 mm$^{-1}$ to 1.0 mm$^{-1}$, 0.4 mm$^{-1}$ to 0.8 mm$^{-1}$, or 0.4 mm$^{-1}$ to 0.7 mm$^{-1}$. That is, the radius of the hollow portion 110 may be 1 mm to 2.5 mm, 1.3 mm to 2.0 mm, or 1.5 mm to 2.0 mm.

In Equation (1), D is an average particle diameter D50 ($\mu$m) of the positive electrode active material particles included in the positive electrode active material layer 116. In an embodiment, D may be 3 $\mu$m to 12 $\mu$m, 3 $\mu$m to 9 $\mu$m, or 3 $\mu$m to 6 $\mu$m.

In Equation (1), "d" is a thickness ($\mu$m) of the positive electrode current collector 115. In an embodiment, "d" may be 12 $\mu$m to 30 $\mu$m, 15 $\mu$m to 30 $\mu$m, or 17 $\mu$m to 30 $\mu$m.

In the positive electrode 114 included in the electrode assembly according to an embodiment of the present disclosure, the loading amount of the positive electrode active material layer 116 may be 30 mg/cm$^2$ or more, 35 mg/cm$^2$ or more, 40 mg/cm$^2$ or more, or 45 mg/cm$^2$ or more.

When the positive electrode 114 included in the electrode assembly according to an embodiment of the present disclosure is a high-loading positive electrode, the loading amount of the positive electrode active material layer 116 is greater than 50 mg/cm$^2$, 50.5 mg/cm$^2$ or more, 51 mg/cm$^2$ or more, 52 mg/cm$^2$ or more, 53 mg/cm$^2$ or more, 54 mg/cm$^2$ or more, 55 mg/cm$^2$ or more, 56 mg/cm$^2$ or more, 57 mg/cm$^2$ or more, greater than 50 mg/cm$^2$ and 65 mg/cm$^2$ or less, greater than 50 mg/cm$^2$ and 64 mg/cm$^2$ or less, greater than 50 mg/cm$^2$ and 63 mg/cm$^2$ or less, greater than 50 mg/cm$^2$ and 62 mg/cm$^2$ or less, greater than 50 mg/cm$^2$ and 61 mg/cm$^2$ or less, greater than 50 mg/cm$^2$ and 60 mg/cm$^2$ or less, 51 mg/cm$^2$ or more and 65 mg/cm$^2$ or less, 51 mg/cm$^2$ or more and 64 mg/cm$^2$ or less, 51 mg/cm$^2$ or more and 63 mg/cm$^2$ or less, 51 mg/cm$^2$ or more and 62 mg/cm$^2$ or less, 51 mg/cm$^2$ or more and 61 mg/cm$^2$ or less, 51 mg/cm$^2$ or more and 60 mg/cm$^2$ or less, 52 mg/cm$^2$ or more and 65 mg/cm$^2$ or less, 52 mg/cm$^2$ or more and 64 mg/cm$^2$ or less, 52 mg/cm$^2$ or more and 62 mg/cm$^2$ or less, 52 mg/cm$^2$ or more and 60 mg/cm$^2$ or less, 55 mg/cm$^2$ or more and 65 mg/cm$^2$ or less, 55 mg/cm$^2$ or more and 64 mg/cm$^2$ or less, 55 mg/cm$^2$ or more and 62 mg/cm$^2$ or less, or 55 mg/cm$^2$ or more and 60 mg/cm$^2$ or less. The loading amount of the positive electrode active material layer 116 may refer to the total loading amount of the entire double-sided electrode. In another example, the positive electrode 114 included in the electrode assembly of the present disclosure may be a single-sided positive electrode in which a positive electrode active material layer 116 is formed on one side of the positive electrode current collector 115, and in the case of the single-sided positive electrode, the loading amount may be a range that is 1/2 times the above-described loading amount range.

The positive electrode 114 of the present disclosure may be formed in a structure in which a positive electrode active material layer 116 is formed either on one side or both sides of a positive electrode current collector 115 in a shape of a long sheet, and the positive electrode active material layer 116 may include a conductive material and a binder in addition to the positive electrode active material 116.

For example, the positive electrode 114 may be manufactured by applying a positive electrode slurry prepared by dispersing a positive electrode active material, a conductive material, and a binder in a solvent such as dimethyl sulfoxide (DMSO), isopropyl alcohol, N-methylpyrrolidone (NMP), acetone, or water on one or both sides of a long sheet-shaped positive electrode current collector, and removing the solvent of the positive electrode slurry through a drying process, followed by rolling.

As for the positive electrode current collector 115, various positive electrode current collectors used in the relevant technical field may be used. Examples of the positive electrode current collector 115 include stainless steel, aluminum, nickel, titanium, calcined carbon, or aluminum or stainless steel surface-treated with carbon, nickel, titanium, silver, or the like. Meanwhile, fine unevenness may be formed on the surface of the positive electrode current collector 115 to increase the adhesion of the positive electrode active material. The positive electrode current collector 115 may be used in various forms, such as a film, a sheet, a foil, a net, a porous body, a foam, a non-woven fabric, or the like. In an embodiment, a thin aluminum film may be used in order to facilitate the controllability of elongation.

Meanwhile, as for the positive electrode active material, various positive electrode active materials generally used in the relevant technical field may be used.

For example, the positive electrode active material may include a lithium nickel-based oxide represented by Formula 2:

[Formula 2] $\qquad$ $Li_xNi_yCo_zM^1_pM^2_qO_2$

In Formula 2, $M^1$ may be Mn, Al, or a combination thereof, and may be, for example, Mn or Mn and Al.

$M^2$ is at least one selected from the group consisting of Zr, W, Y, Ba, Ca, Ti, Mg, Ta, and Nb, and may be, for example, at least one selected from the group consisting of Zr, Y, Mg, and Ti, or may be Zr, Y, or a combination thereof. The $M^2$ element is not necessarily included, but when included in an appropriate amount, it may promote grain growth during sintering or play a role in improving crystal structure stability.

The symbol x represents a molar ratio of lithium in the lithium nickel-based oxide, and may be approximately $0.8 \le x \le 1.2$, $0.85 \le x \le 1.15$, or $0.9 \le x \le 1.2$. When the molar ratio of lithium satisfies the above range, the crystal structure of the lithium nickel-based oxide may be stably formed.

The symbol y represents a molar ratio of nickel among the total metal excluding lithium in the lithium nickel-based oxide, and may be $0.85 \le y < 1$, $0.86 \le y < 1$, or $0.88 \le y < 1$. When the molar ratio of nickel satisfies the above range, high energy density is exhibited, enabling high capacity implementation.

The symbol z represents a molar ratio of cobalt among the total metals excluding lithium in the lithium nickel-based oxide, and may be $0 < z < 0.15$, $0 < z < 0.14$, or $0.01 \le z \le 0.12$. When the molar ratio of cobalt satisfies the above range, good resistance characteristics and output characteristics may be implemented.

The symbol p represents a molar ratio of the $M^1$ element among the total metal excluding lithium in the lithium nickel-based oxide, and may be $0 < p < 0.15$, $0 < p < 0.14$, or $0.01 \le p \le 0.12$. When the molar ratio of the $M^1$ element satisfies the above range, the structural stability of the positive electrode active material is excellent.

The symbol q represents a molar ratio of the $M^2$ element among the total metal excluding lithium in the lithium nickel-based oxide, and may be $0 \le q \le 0.1$ or $0 \le q \le 0.05$.

Meanwhile, the positive electrode active material according to the present disclosure may further include, when necessary, a coating layer including one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si and S, on the surface of the lithium nickel-based oxide particles. For example, the coating element may be Al, B, Co, or a combination thereof, or the coating element may be B.

When a coating layer exists on the surface of lithium nickel-based oxide particles, contact between the electrolyte and the lithium composite transition metal oxide is suppressed by the coating layer, thereby reducing the elution of transition metal or gas generation due to side reactions with the electrolyte.

The positive electrode active material may be included in an amount of 80 wt% to 99 wt%, 85 wt% to 99 wt%, or 90 wt% to 99 wt% based on the total weight of the positive electrode active material layer.

Meanwhile, the positive electrode active material according to the present disclosure may have a unimodal particle size distribution or a bimodal particle size distribution. When a positive electrode active material having a unimodal distribution is used, the increase in resistance may be minimized. When a bimodal positive electrode active material is used by mixing a large-particle positive electrode active material having a large average particle size and a small-particle positive electrode active material having a small average particle size, the electrode density may be improved.

Meanwhile, the positive electrode active material is not particularly limited in its form, and may be in a form of a secondary particle in which a plurality of primary particles are aggregated, a single particle formed of a single primary particle, or a combination thereof.

The positive electrode active material may include a positive electrode active material made of a single particle formed of one primary particle and/or a quasi-single particle which is an aggregate of 10 or fewer primary particles. By using the positive electrode active material made of a single particle formed of one primary particle and/or a quasi-single particle which is an aggregate of 10 or fewer primary particles, a cylindrical battery having high capacity and excellent safety may be obtained.

In the past, it was common to use spherical secondary particles in which tens to hundreds of primary particles were aggregated as the positive electrode active material of lithium secondary batteries. However, in the case of positive electrode active materials in the form of secondary particles in which many primary particles are aggregated, there is a problem that the primary particles are easily broken during the rolling process of the positive electrode manufacturing process, and cracks occur inside the particles during the charge and discharge process. When the positive electrode active material particles break or cracks occur inside the particles, the contact area with the electrolyte increases, which increases the problem of gas generation due to side reactions with the electrolyte. When the gas generation inside a cylindrical battery increases, the pressure inside the battery increases, which may cause a battery explosion. In particular, when the volume of the cylindrical battery is increased, the amount of active material inside the battery increases as the volume increases, and as a result, the amount of gas generation also significantly increases, which increases the risk of ignition and/or explosion of the battery.

In comparison, the positive electrode active material in the form of a single particle or a quasi-single particle in which 10 or fewer primary particles are aggregated, has higher particle strength than the existing secondary particle type positive electrode active material in which tens to hundreds of primary particles are aggregated, so that particle breakage hardly occurs during rolling. In addition, in the case of the positive electrode active material in the form of a single particle or a quasi-single particle, since the number of primary particles constituting the particle is relatively small, the change due to volume expansion and contraction of the primary particles during charge and discharge is relatively small, and thus, the occurrence of cracks inside the particle is significantly reduced.

Therefore, when using a positive electrode active material made of single particles and/or quasi-single particles, the amount of gas generated due to particle breakage and internal cracking may be significantly reduced, and thus, excellent safety may be achieved even in a cylindrical battery.

Meanwhile, the positive electrode active material made of the single particles and/or quasi-single particles is included in an amount of 95 wt% to 100 wt%, 98 wt% to 100 wt%, 99 wt% to 100 wt%, or 100 wt%, based on the weight of the total positive electrode active material included in the positive electrode active material layer. When the content of the single particles and/or quasi-single particles satisfies the above range, sufficient safety may be secured when applying a cylindrical battery.

Next, the conductive material used to impart conductivity to the electrode may be any material that is electrically conductive without causing chemical changes in the battery to be constructed, without any particular limitation. Examples of the conductive material include graphite such as natural graphite or artificial graphite; carbon-based materials such as carbon black, acetylene black, Ketjen black, channel black, furnace black, lamp black, thermal black, carbon fiber, and carbon nanotube; metal powder or metal fiber such as copper, nickel, aluminum, and silver; conductive whiskers such as zinc oxide and potassium titanate; conductive metal oxides such as titanium oxide; or conductive polymers such as polyphenylene derivatives, which may be used either alone or in a mixture of two or more thereof.

The conductive material may be included in an amount of 0.1 wt% to 2.0 wt%, 0.6 wt% to 2.0 wt%, or 1.2 wt% to 2.0 wt% based on the total weight of the positive electrode active material layer.

The binder serves to improve the adhesion between positive electrode active material particles and the adhesive strength between the positive electrode active material and the positive electrode current collector, and examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, or various copolymers thereof, which may be used either alone or in mixture of two or more thereof.

The binder may be included in an amount of 1 wt% to 3 wt%, 1.5 wt% to 3.0 wt%, or 2 wt% to 3 wt% based on the total weight of the positive electrode active material layer.

The negative electrode 112 may be formed in a structure in which a negative electrode active material layer is formed either on one side or both sides of a negative electrode current collector in a shape of a long sheet, and the negative electrode active material layer may include a negative electrode active material, a conductive material, and a binder.

For example, the negative electrode 112 may be manufactured by applying a negative electrode slurry prepared by dispersing a negative electrode active material, a conductive material, and a binder in a solvent such as dimethyl sulfoxide (DMSO), isopropyl alcohol, N-methylpyrrolidone (NMP), acetone, or water on one or both sides of a long sheet-shaped negative electrode current collector, and removing the solvent of the negative electrode slurry through a drying process, followed by rolling.

As for the negative electrode current collector, negative electrode current collectors generally used in the relevant technical field may be used, and examples thereof include copper, stainless steel, aluminum, nickel, titanium, calcined carbon, copper, or stainless steel surface-treated with carbon, nickel, titanium, or silver, aluminum-cadmium alloy, and the like. The negative electrode current collector may typically have a thickness of about 3 μm to 500 μm, and as in the positive electrode current collector 115, fine unevenness may be formed on the surface of the current collector to strengthen the bonding strength of the negative electrode active material. For example, the negative electrode current collector may be used in various forms, such as a film, a sheet, a foil, a net, a porous body, a foam, a non-woven body, and the like.

The negative electrode active material may include a silicon-based negative electrode active material such as Si, a Si-Me alloy (wherein Me is at least one selected from the group consisting of Al, Sn, Mg, Cu, Fe, Pb, Zn, Mn, Cr, Ti, and Ni), $SiO_y$ (wherein 0<y<2), a Si-C composite, and the like, and examples thereof may include a silicon-based negative electrode active material selected from the group consisting of SiO, SiC, and Si.

As for a negative electrode active material other than the silicon-based negative electrode active material, a compound capable of reversible intercalation and deintercalation of lithium may be used. Examples thereof include carbonaceous materials such as artificial graphite, natural graphite, graphitized carbon fiber, and amorphous carbon; lithium metal thin films; and metal materials capable of alloying with lithium, such as Sn and Al, which may be used either alone or in a mixture of two or more thereof.

A negative electrode 112 containing the silicon-based negative electrode active material may implement high capacity, but has a low structural stability due to extreme shrinkage and expansion during the charge and discharge process, so the silicon-based negative electrode active material may be used in combination with a carbon-based negative electrode active material. For example, a material containing a mixture of graphite and SiO may be used as the negative electrode active material.

The silicon-based negative electrode active material may be included in an amount of 1 wt% to 5 wt%, or 4 wt% to 5 wt% based on the entire negative electrode active material layer.

The conductive material used to impart conductivity to the negative electrode may be any material that is electrically conductive without causing chemical changes in the battery to be constructed, without any particular limitation. Examples of the conductive material include graphite such as natural graphite or artificial graphite; carbon-based materials such as carbon black, acetylene black, Ketjen black, channel black, furnace black, lamp black, thermal black, carbon fiber, and carbon nanotube; metal powder or metal fiber such as copper, nickel, aluminum, and silver; conductive whiskers such as zinc oxide and potassium titanate; conductive metal oxides such as titanium oxide; or conductive polymers such as polyphenylene derivatives, which may be used either alone or in a mixture of two or more thereof.

The conductive material may typically be included in an amount of 0.01 wt% to 2.00 wt%, 0.5 wt% to 2.0 wt%, or 0.75 wt% to 1.25 wt% based on the total weight of the negative electrode active material layer.

The binder serves to improve the adhesion between the negative electrode active material particles and the adhesive strength between the negative electrode active material and the negative electrode current collector. Examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, or various copolymers thereof, which may be used either alone or in mixture of two or more thereof.

The binder may be included in an amount of 0.1 wt% to 5.0 wt%, 1 wt% to 6 wt%, or 2 wt% to 3 wt% based on the total weight of the negative electrode active material layer.

In addition to the positive electrode 114 and the negative electrode 112, a separator 113 is interposed between the positive electrode 114 and the negative electrode 112 to separate the negative electrode 112 and the positive electrode 114, and to provide a migration passage for lithium ions. Any separator commonly used in lithium secondary batteries, may be used without any particular limitation. For example, the separator 113 may be a porous polymer film, for example, a porous polymer film made of a polyolefin polymer such as ethylene homopolymer, propylene homopolymer, ethylene/-butene copolymer, ethylene/hexene copolymer, and ethylene/methacrylate copolymer, or a laminated structure of two or more layers thereof. In addition, a conventional porous non-woven fabric, for example, a non-woven fabric made of high-melting-point glass fiber, polyethylene terephthalate fiber, and the like, may be used. In addition, a coated separator containing a ceramic component or a polymer material may be used to secure heat resistance or mechanical strength.

In addition, the electrolyte used in the present disclosure may include, but is not limited to, an organic liquid electrolyte, an inorganic liquid electrolyte, a solid polymer electrolyte, a gel-type polymer electrolyte, a solid inorganic electrolyte, a molten inorganic electrolyte, and the like, that may be used in the manufacture of a lithium secondary battery.

For example, the electrolyte may contain an organic solvent and a lithium salt.

As for the organic solvent, any solvent capable of acting as a medium through which ions involved in the electrochemical reaction of the battery may migrate may be used without particular limitation. Examples of the organic solvent include ester solvents such as methyl acetate, ethyl acetate, $\gamma$-butyrolactone, and $\varepsilon$-caprolactone; ether solvents such as dibutyl ether or tetrahydrofuran; ketone solvents such as cyclohexanone; aromatic hydrocarbon solvents such as benzene and fluorobenzene; carbonate solvents such as dimethylcarbonate (DMC), diethylcarbonate (DEC), ethylmethylcarbonate (EMC), ethylene carbonate (EC), and propylene carbonate (PC); alcohol solvents such as ethyl alcohol and isopropyl alcohol; nitriles such as R-CN (R is a linear, branched, or cyclic hydrocarbon group having 2 to 20 carbon atoms, which may include a double-bonded aromatic ring or an ether bond); amides such as dimethylformamide; dioxolanes such as 1,3-dioxolane; and sulfolanes. In an embodiment, a carbonate solvent may be used, and a mixture of a cyclic carbonate having high ionic conductivity and high dielectric constant capable of improving charge/discharge performance of the battery (e.g., ethylene carbonate or propylene carbonate) and a low-viscosity linear carbonate compound (e.g., ethyl methyl carbonate, dimethyl carbonate, or diethyl carbonate) may be used.

The lithium salt may be used without any particular limitations as long as it is a compound capable of providing lithium ions used in a lithium secondary battery. For example, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and the lithium salt may be at least one selected from the group consisting of $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, and $LiB(C_2O_4)_2$. The concentration of the lithium salt may be used within the range of 0.1 M to 2.0 M. When the concentration of lithium salt is within the above range, the electrolyte has appropriate conductivity and viscosity, which may exhibit good electrolyte performance, and the lithium ions may be effectively transported.

In addition to the electrolyte components, the electrolyte may further contain one or more additives, such as, for example, haloalkylene carbonate compounds such as difluoroethylene carbonate, pyridine, triethylphosphite, triethanolamine, cyclic ethers, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, for the purpose of improving the life characteristics of the battery, suppressing battery capacity decrease, and improving the discharge capacity of the battery. In this case, the additive may be contained in an amount of 0.1 wt% to 10 wt% based on the total weight of the electrolyte.

The external shape of the lithium secondary battery of the present disclosure may be a cylindrical or square shape using a can.

The cylindrical lithium secondary battery 100 according to the present disclosure may be used not only as a battery cell used as a power source for a small device, but also as a unit battery in a medium- to large-sized battery module including a plurality of battery cells.

Examples of the medium- to large-sized devices include, but are not limited to, electric vehicles (EVs), hybrid electric vehicles (HEVs), plug-in hybrid electric vehicles, and power storage systems.

Hereinafter, the present disclosure will be described through Examples. However, the following examples are intended to illustrate the invention and are not intended to limit the scope of the present disclosure. It will be obvious to those skilled in the art that various changes and modifications may be made within the scope of the present description and the technical idea, and that such changes and modifications fall within the scope of the appended claims.

## EXAMPLE

### Example 1

A positive electrode slurry was prepared by mixing $Li[Ni_{0.9}Co_{0.05}Mn_{0.03}Al_{0.02}]O_2$ having an average particle diameter $D_{50}$ of 10.5 $\mu$m, carbon nanotubes, and PVDF binder in a weight ratio of 95:2:3 in N-methylpyrrolidone. The positive electrode slurry was applied to one surface of a 15.0 $\mu$m thick aluminum current collector sheet, dried at 120°C, and then rolled to prepare a positive electrode. The loading of the prepared positive electrode active material layer was 58 mg/cm$^2$ based on a double-sided electrode.

A negative electrode slurry was prepared by mixing a negative electrode active material (graphite:SiO = 95:5 weight ratio mixture), a conductive material (super C), styrene-butadiene rubber (SBR) and carboxymethyl cellulose (CMC) in a weight ratio of 95:2:2:1 in water. The negative electrode slurry was applied to one surface of a copper current collector sheet, dried at 150 °C, and then rolled to prepare a negative electrode.

A separator was interposed between the positive and negative electrodes prepared as described above, and the separator and the electrodes were stacked in the order of separator/positive electrode/separator/negative electrode, and then wound to prepare a jelly-roll type electrode assembly. The radius and the curvature of the hollow portion of the prepared electrode assembly were 2.0 mm and 0.500 mm$^{-1}$, respectively. The electrode assembly prepared as described above was inserted into a cylindrical battery can, and an electrolyte was injected to prepare a 2170 cylindrical cell having specifications of 21 mm in diameter and 70 mm in length.

### Example 2

A positive electrode slurry was prepared by mixing $Li[Ni_{0.9}Co_{0.05}Mn_{0.03}Al_{0.02}]O_2$ having an average particle diameter $D_{50}$ of 8.5 $\mu$m, carbon nanotubes, and PVDF binder in a weight ratio of 95:2:3 in N-methylpyrrolidone. The positive electrode slurry was applied to both surfaces of a 15.0 $\mu$m thick aluminum current collector sheet, dried at 120°C, and then rolled to prepare a positive electrode. The loading of the prepared positive electrode active material layer was 58 mg/cm$^2$ based on a double-sided electrode.

A negative electrode slurry was prepared by mixing a negative electrode active material (graphite:SiO = 95:5 weight ratio mixture), a conductive material (super C), styrene-butadiene rubber (SBR) and carboxymethyl cellulose (CMC) in a weight ratio of 95:2:2:1 in water. The negative electrode slurry was applied to one surface of a copper current collector sheet, dried at 150 °C, and then rolled to prepare a negative electrode.

A separator was interposed between the positive and negative electrodes prepared as described above, and the separator and the electrodes were stacked in the order of separator/positive electrode/separator/negative electrode, and then wound to prepare a jelly-roll type electrode assembly. The radius and the curvature of the hollow portion of the prepared electrode assembly were 1.8 mm and 0.556 mm$^{-1}$, respectively. The electrode assembly prepared as described above was inserted into a cylindrical battery can, and an electrolyte was injected to prepare a 2170 cylindrical cell having specifications of 21 mm in diameter and 70 mm in length.

### Example 3

A positive electrode slurry was prepared by mixing $Li[Ni_{0.9}Co_{0.05}Mn_{0.03}Al_{0.02}]O_2$ having an average particle diameter $D_{50}$ of 4.0 $\mu$m, carbon nanotubes, and PVDF binder in a weight ratio of 95:2:3 in N-methylpyrrolidone. The positive electrode slurry was applied to one surface of a 15.0 $\mu$m thick aluminum current collector sheet, dried at 120°C, and then rolled to prepare a positive electrode. The loading of the prepared positive electrode active material layer was 58

mg/cm$^2$ based on a double-sided electrode.

A negative electrode slurry was prepared by mixing a negative electrode active material (graphite:SiO = 95:5 weight ratio mixture), a conductive material (super C), styrene-butadiene rubber (SBR) and carboxymethyl cellulose (CMC) in a weight ratio of 95:2:2:1 in water. The negative electrode slurry was applied to one surface of a copper current collector sheet, dried at 150 °C, and then rolled to prepare a negative electrode.

A separator was interposed between the positive and negative electrodes prepared as described above, and the separator and the electrodes were stacked in the order of separator/positive electrode/separator/negative electrode, and then wound to prepare a jelly-roll type electrode assembly. The radius and the curvature of the hollow portion of the prepared electrode assembly were 1.8 mm and 0.556 mm$^{-1}$, respectively. The electrode assembly prepared as described above was inserted into a cylindrical battery can, and an electrolyte was injected to prepare a 2170 cylindrical cell having specifications of 21 mm in diameter and 70 mm in length.

Example 4

A positive electrode slurry was prepared by mixing Li[Ni$_{0.9}$Co$_{0.05}$Mn$_{0.03}$Al$_{0.02}$]O$_2$ having an average particle diameter D$_{50}$ of 4.0 $\mu$m, carbon nanotubes, and PVDF binder in a weight ratio of 95:2:3 in N-methylpyrrolidone. The positive electrode slurry was applied to one surface of a 15.0 $\mu$m thick aluminum current collector sheet, dried at 120°C, and then rolled to prepare a positive electrode. The loading of the prepared positive electrode active material layer was 58 mg/cm$^2$ based on a double-sided electrode.

A negative electrode slurry was prepared by mixing a negative electrode active material (graphite:SiO = 95:5 weight ratio mixture), a conductive material (super C), styrene-butadiene rubber (SBR) and carboxymethyl cellulose (CMC) in a weight ratio of 95:2:2:1 in water. The negative electrode slurry was applied to one surface of a copper current collector sheet, dried at 150 °C, and then rolled to prepare a negative electrode.

A separator was interposed between the positive and negative electrodes prepared as described above, and the separator and the electrodes were stacked in the order of separator/positive electrode/separator/negative electrode, and then wound to prepare a jelly-roll type electrode assembly. The radius and the curvature of the hollow portion of the prepared electrode assembly were 1.6 mm and 0.625 mm$^{-1}$, respectively. The electrode assembly prepared as described above was inserted into a cylindrical battery can, and an electrolyte was injected to prepare a 2170 cylindrical cell having specifications of 21 mm in diameter and 70 mm in length.

**Comparative Example 1**

A positive electrode slurry was prepared by mixing Li[Ni$_{0.9}$Co$_{0.05}$Mn$_{0.03}$Al$_{0.02}$]O$_2$ having an average particle diameter D$_{50}$ of 10.5 $\mu$m, carbon nanotubes, and PVDF binder in a weight ratio of 95:2:3 in N-methylpyrrolidone. The positive electrode slurry was applied to one surface of a 15.0 $\mu$m thick aluminum current collector sheet, dried at 120°C, and then rolled to prepare a positive electrode. The loading of the prepared positive electrode active material layer was 50 mg/cm$^2$ based on a double-sided electrode.

A negative electrode slurry was prepared by mixing a negative electrode active material (graphite:SiO = 95:5 weight ratio mixture), a conductive material (super C), styrene-butadiene rubber (SBR) and carboxymethyl cellulose (CMC) in a weight ratio of 95:2:2:1 in water. The negative electrode slurry was applied to one surface of a copper current collector sheet, dried at 150 °C, and then rolled to prepare a negative electrode.

A separator was interposed between the positive and negative electrodes prepared as described above, and the separator and the electrodes were stacked in the order of separator/positive electrode/separator/negative electrode, and then wound to prepare a jelly-roll type electrode assembly. The radius and the curvature of the hollow portion of the prepared electrode assembly were 1.6 mm and 0.625 mm$^{-1}$, respectively. The electrode assembly prepared as described above was inserted into a cylindrical battery can, and an electrolyte was injected to prepare a 2170 cylindrical cell having specifications of 21 mm in diameter and 70 mm in length.

**Comparative Example 2**

A positive electrode slurry was prepared by mixing Li[Ni$_{0.9}$Co$_{0.05}$Mn$_{0.03}$Al$_{0.02}$]O$_2$ having an average particle diameter D$_{50}$ of 10.5 $\mu$m, carbon nanotubes, and PVDF binder in a weight ratio of 95:2:3 in N-methylpyrrolidone. The positive electrode slurry was applied to one surface of a 15.0 $\mu$m thick aluminum current collector sheet, dried at 120°C, and then rolled to prepare a positive electrode. The loading of the prepared positive electrode active material layer was 58 mg/cm$^2$ based on a double-sided electrode.

A negative electrode slurry was prepared by mixing a negative electrode active material (graphite:SiO = 95:5 weight ratio mixture), a conductive material (super C), styrene-butadiene rubber (SBR) and carboxymethyl cellulose (CMC) in a weight ratio of 95:2:2:1 in water. The negative electrode slurry was applied to one surface of a copper current collector sheet, dried at 150 °C, and then rolled to prepare a negative electrode.

A separator was interposed between the positive and negative electrodes prepared as described above, and the separator and the electrodes were stacked in the order of separator/positive electrode/separator/negative electrode, and then wound to prepare a jelly-roll type electrode assembly. The radius and the curvature of the hollow portion of the prepared electrode assembly were 1.6 mm and 0.625 $mm^{-1}$, respectively. The electrode assembly prepared as described above was inserted into a cylindrical battery can, and an electrolyte was injected to prepare a 2170 cylindrical cell having specifications of 21 mm in diameter and 70 mm in length.

## Comparative Example 3

A positive electrode slurry was prepared by mixing $Li[Ni_{0.9}Co_{0.05}Mn_{0.03}Al_{0.02}]O_2$ having an average particle diameter $D_{50}$ of 8.5 $\mu$m, carbon nanotubes, and PVDF binder in a weight ratio of 95:2:3 in N-methylpyrrolidone. The positive electrode slurry was applied to one surface of a 12.0 $\mu$m thick aluminum current collector sheet, dried at 120°C, and then rolled to prepare a positive electrode. The loading of the prepared positive electrode active material layer was 58 $mg/cm^2$ based on a double-sided electrode.

A negative electrode slurry was prepared by mixing a negative electrode active material (graphite:SiO = 95:5 weight ratio mixture), a conductive material (super C), styrene-butadiene rubber (SBR) and carboxymethyl cellulose (CMC) in a weight ratio of 95:2:2:1 in water. The negative electrode slurry was applied to one surface of a copper current collector sheet, dried at 150 °C, and then rolled to prepare a negative electrode.

A separator was interposed between the positive and negative electrodes prepared as described above, and the separator and the electrodes were stacked in the order of separator/positive electrode/separator/negative electrode, and then wound to prepare a jelly-roll type electrode assembly. The radius and the curvature of the hollow portion of the prepared electrode assembly were 1.8 mm and 0.556 $mm^{-1}$, respectively. The electrode assembly prepared as described above was inserted into a cylindrical battery can, and an electrolyte was injected to prepare a 2170 cylindrical cell having specifications of 21 mm in diameter and 70 mm in length.

## Comparative Example 4

A positive electrode slurry was prepared by mixing $Li[Ni_{0.9}Co_{0.05}Mn_{0.03}Al_{0.02}]O_2$ having an average particle diameter $D_{50}$ of 10.5 $\mu$m, carbon nanotubes, and PVDF binder in a weight ratio of 95:2:3 in N-methylpyrrolidone. The positive electrode slurry was applied to one surface of a 15 $\mu$m thick aluminum current collector sheet, dried at 120°C, and then rolled to prepare a positive electrode. The loading of the prepared positive electrode active material layer was 58 $mg/cm^2$ based on a double-sided electrode.

A negative electrode slurry was prepared by mixing a negative electrode active material (graphite:SiO = 95:5 weight ratio mixture), a conductive material (super C), styrene-butadiene rubber (SBR) and carboxymethyl cellulose (CMC) in a weight ratio of 95:2:2:1 in water. The negative electrode slurry was applied to one surface of a copper current collector sheet, dried at 150 °C, and then rolled to prepare a negative electrode.

A separator was interposed between the positive and negative electrodes prepared as described above, and the separator and the electrodes were stacked in the order of separator/positive electrode/separator/negative electrode, and then wound to prepare a jelly-roll type electrode assembly. The radius and the curvature of the hollow portion of the prepared electrode assembly were 1.8 mm and 0.556 $mm^{-1}$, respectively. The electrode assembly prepared as described above was inserted into a cylindrical battery can, and an electrolyte was injected to prepare a 2170 cylindrical cell having specifications of 21 mm in diameter and 70 mm in length.

## Experimental Example

The initial capacity was measured for the 2170 cylindrical cells of Examples 1 to 4 and Comparative Examples 1 to 4. For example, each cell was charged to 4.2 V at a constant current of 0.2 C at 25 °C, and then discharged to 2.5 V at a constant current of 0.2 C, and the initial discharge capacity was measured. The results are shown in Table 1 below.

In addition, it was confirmed whether core cracks occurred during winding for the 2170 cylindrical cells of Examples 1 to 4 and Comparative Examples 1 to 4. The results are shown in Table 1 below.

Table 1

|  | Y | Initial Capacity (mAh) | Crack Occurrence |
|---|---|---|---|
| Example 1 | 0.350 | 4955 | X |
| Example 2 | 0.315 | 4920 | X |

(continued)

|  | Y | Initial Capacity (mAh) | Crack Occurrence |
|---|---|---|---|
| Example 3 | 0.148 | 4980 | X |
| Example 4 | 0.167 | 5020 | X |
| Comparative Example 1 | 0.438 | 4880 | X |
| Comparative Example 2 | 0.438 | 5010 | O |
| Comparative Example 3 | 0.394 | 5015 | O |
| Comparative Example 4 | 0.389 | 4970 | O |

As can be seen in Table 1, the lithium secondary batteries of Examples 1 to 4 using electrode assemblies having a Y value of less than 0.38 did not exhibit cracks during winding of the electrode assemblies, whereas the lithium secondary batteries of Comparative Examples 2 to 4 using electrode assemblies having a Y value of greater than 0.38 exhibited cracks during winding of the electrode assemblies. It can be seen that the electrode assembly having a low positive electrode loading as low as 50 mg/cm$^2$ as in Comparative Example 1, did not exhibit the problem of core cracks. From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. An electrode assembly comprising:

    a positive electrode including a positive electrode current collector and a positive electrode active material layer positioned on the positive electrode current collector;
    a negative electrode; and
    a separator interposed between the positive electrode and the negative electrode,
    wherein the positive electrode, the negative electrode, and the separator are wound in one direction, and
    Y is less than 0.38, as defined by Equation (1):

$$Y = c \times D / d \qquad (1)$$

    wherein c is a curvature of a hollow portion surrounded by a wound electrode assembly, D is an average particle diameter $D_{50}$ ($\mu$m) of positive electrode active material particles included in the positive electrode active material layer, and d is a thickness ($\mu$m) of the positive electrode current collector.

2. The electrode assembly according to claim 1, wherein a loading amount of the positive electrode active material layer is greater than 50 mg/cm$^2$.

3. The electrode assembly according to claim 1, wherein c is 0.1 to 0.5.

4. The electrode assembly according to claim 1, wherein the curvature c of the hollow portion surrounded by the wound electrode assembly is a reciprocal of a radius of the hollow portion (mm).

5. The electrode assembly according to claim 4, wherein the radius of the hollow portion is 2 mm to 10 mm.

6. The electrode assembly according to claim 1, wherein D is 3 $\mu$m to 12 $\mu$m.

7. The electrode assembly according to claim 1, wherein d is 12 $\mu$m to 30 $\mu$m.

8. The electrode assembly according to claim 1, wherein the positive electrode active material is a lithium nickel-based oxide represented by Chemical Formula 1:

[Formula 1]  $Li_xNi_yCo_zM^1_pM^2_qO_2$

wherein $M^1$ is Mn, Al, or a combination thereof, $M^2$ is at least one selected from the group consisting of Zr, W, Y, Ba, Ca, Ti, Mg, Ta, and Nb, and x, y, z, p, and q satisfy $0.8 \leq x \leq 1.2$, $0.8 \leq y < 1$, $0 < z < 0.2$, $0 < p < 0.2$, $0 \leq q \leq 0.1$.

9.  The electrode assembly according to claim 1, wherein the negative electrode includes a negative electrode active material layer including a negative electrode active material, and
the negative electrode active material included in the negative electrode active material layer is made of a mixture of graphite and SiO.

10. The electrode assembly according to claim 9, wherein SiO is contained in an amount of 1 wt% to 5 wt% based on the total weight of the negative electrode active material.

11. The electrode assembly according to claim 1, wherein a loading amount of the positive electrode active material layer is 30 mg/cm$^2$ or more.

12. A cylindrical lithium secondary battery comprising:

the electrode assembly according to claim 1;
a battery can in which the electrode assembly is accommodated;
an electrolyte poured into the battery can; and
a sealing body configured to seal an open end of the battery can.

13. A method for manufacturing an electrode assembly including:

a positive electrode including a positive electrode current collector and a positive electrode active material layer positioned on the positive electrode current collector;
a negative electrode; and
a separator interposed between the positive electrode and the negative electrode,
the method comprising:

wounding the positive electrode, the negative electrode, and the separator in one direction; and
adjusting Y to become less than 0.38, as defined by Equation (1):

$$Y = c \times D / d \qquad (1)$$

wherein c is a curvature of a hollow portion surrounded by the wound electrode assembly, D is an average particle diameter $D_{50}$ ($\mu$m) of positive electrode active material particles included in the positive electrode active material layer, and d is a thickness ($\mu$m) of the positive electrode current collector.

14. The method according to claim 13, wherein a loading amount of the positive electrode active material layer is greater than 50 mg/cm$^2$.

15. The method according to claim 13, wherein c is 0.1 to 0.5.

16. The method according to claim 13, wherein the curvature c of the hollow portion surrounded by the wound electrode assembly is a reciprocal of a radius of the hollow portion (mm), and
the radius of the hollow portion is 2 mm to 10 mm.

17. The method according to claim 13, wherein D is 3 $\mu$m to 12 $\mu$m.

18. The method according to claim 13, wherein d is 12 $\mu$m to 30 $\mu$m.

[FIG. 1]

[FIG. 2]

[FIG. 3]

```
                        ┌──────────────────┐
                        │      START       │
                        └──────────────────┘
                                 │
                                 ▼
S312 ── ┌────────────────────────────────────────────┐
        │  DETERMINING TARGET CAPACITY OF SECONDARY   │
        │               BATTERY                       │
        └────────────────────────────────────────────┘
                                 │
                                 ▼
S314 ── ┌────────────────────────────────────────────┐ ◄──────┐
        │  SELECTING POSITIVE ELECTRODE ACTIVE        │        │
        │               MATERIAL                      │        │
        └────────────────────────────────────────────┘        │
                                 │                             │
                                 ▼                             │
S316 ── ┌────────────────────────────────────────────┐        │
        │  DETERMINING THICKNESS OF POSITIVE ELECTRODE│        │
        │           CURRENT COLLECTOR                 │        │
        └────────────────────────────────────────────┘        │
                                 │                             │
                                 ▼                             │
S318 ── ┌────────────────────────────────────────────┐        │
        │   DETERMINING CURVATURE OF HOLLOW PORTION   │        │
        └────────────────────────────────────────────┘        │
                                 │                             │
                                 ▼                             │
S320 ──        ◇ Y = c × D/d < SET VALUE? ◇ ─── NO ───────────┘
                                 │
                                YES
                                 ▼
S322 ── ┌────────────────────────────────────────────┐
        │       PREPARING POSITIVE ELECTRODE SLURRY   │
        └────────────────────────────────────────────┘
                                 │
                                 ▼
S324 ── ┌────────────────────────────────────────────┐
        │  APPLYING POSITIVE ELECTRODE SLURRY TO      │
        │    POSITIVE ELECTRODE CURRENT COLLECTOR     │
        └────────────────────────────────────────────┘
                                 │
                                 ▼
S326 ── ┌────────────────────────────────────────────┐
        │  DRYING AND ROLLING POSITIVE ELECTRODE      │
        │               SLURRY                        │
        └────────────────────────────────────────────┘
                                 │
                                 ▼
S328 ── ┌────────────────────────────────────────────┐
        │     PREPARING NEGATIVE ELECTRODE SLURRY     │
        └────────────────────────────────────────────┘
                                 │
                                 ▼
S330 ── ┌────────────────────────────────────────────┐
        │  APPLYING NEGATIVE ELECTRODE SLURRY TO      │
        │   NEGATIVE ELECTRODE CURRENT COLLECTOR      │
        └────────────────────────────────────────────┘
                                 │
                                 ▼
S332 ── ┌────────────────────────────────────────────┐
        │  DRYING AND ROLLING NEGATIVE ELECTRODE      │
        │               SLURRY                        │
        └────────────────────────────────────────────┘
                                 │
                                 ▼
S334 ── ┌────────────────────────────────────────────┐
        │          INTERPOSING SEPARATOR              │
        └────────────────────────────────────────────┘
                                 │
                                 ▼
S336 ── ┌────────────────────────────────────────────┐
        │  WINDING TO COMPLETE ELECTRODE ASSEMBLY     │
        └────────────────────────────────────────────┘
                                 │
                                 ▼
S338 ── ┌────────────────────────────────────────────┐
        │  INSERTING ELECTRODE ASSEMBLY TO BATTERY    │
        │    CAN AND INJECTING ELECTROLYTE            │
        └────────────────────────────────────────────┘
                                 │
                                 ▼
S340 ── ┌────────────────────────────────────────────┐
        │               SEALING                       │
        └────────────────────────────────────────────┘
                                 │
                                 ▼
                        ┌──────────────────┐
                        │       END        │
                        └──────────────────┘
```

## INTERNATIONAL SEARCH REPORT

| International application No. |
|---|
| **PCT/KR2024/013527** |

| | |
|---|---|
| **A.** | **CLASSIFICATION OF SUBJECT MATTER** |

**H01M 10/0587**(2010.01)i; **H01M 4/525**(2010.01)i; **H01M 4/505**(2010.01)i; **H01M 4/131**(2010.01)i; **H01M 4/36**(2006.01)i; **H01M 4/587**(2010.01)i; **H01M 4/485**(2010.01)i; **H01M 10/052**(2010.01)i; **H01M 10/04**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01M 10/0587(2010.01); H01M 10/05(2010.01); H01M 10/052(2010.01); H01M 2/16(2006.01); H01M 4/02(2006.01); H01M 4/04(2006.01); H01M 4/13(2010.01); H01M 50/533(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(anode), 집전체(collector), 활물질층(active material layer), 곡률(curvature), 입경(grain diameter), 두께(thickness)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-1088220 B1 (PANASONIC CORPORATION) 30 November 2011 (2011-11-30)<br>See paragraphs [0115]-[0165] and claim 1. | 1,3-8,12-13,15-18 |
| Y | | 2,9-11,14 |
| Y | KR 10-2023-0054601 A (LG ENERGY SOLUTION, LTD.) 25 April 2023 (2023-04-25)<br>See paragraphs [0071]-[0251]. | 2,9-11,14 |
| A | KR 10-2011-0002490 A (PANASONIC CORPORATION) 07 January 2011 (2011-01-07)<br>See claims 1-10. | 1-18 |
| A | KR 10-2017-0044322 A (LG CHEM, LTD.) 25 April 2017 (2017-04-25)<br>See claims 1-15. | 1-18 |
| A | JP 6227168 B1 (HITACHI, LTD.) 08 November 2017 (2017-11-08)<br>See claims 1-12. | 1-18 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2024** | **06 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013527**

| Patent document cited in search report | | | Publication date (day/month/year) | Patent family member(s) | | | Publication date (day/month/year) |
|---|---|---|---|---|---|---|---|
| KR | 10-1088220 | B1 | 30 November 2011 | CN | 101855753 | A | 06 October 2010 |
| | | | | CN | 101855753 | B | 27 February 2013 |
| | | | | JP | 4366451 | B1 | 18 November 2009 |
| | | | | KR | 10-2010-0100589 | A | 15 September 2010 |
| | | | | US | 2011-0287288 | A1 | 24 November 2011 |
| | | | | WO | 2010-086903 | A1 | 05 August 2010 |
| KR | 10-2023-0054601 | A | 25 April 2023 | CN | 118077081 | A | 24 May 2024 |
| | | | | EP | 4418401 | A1 | 21 August 2024 |
| | | | | JP | 2024-537149 | A | 10 October 2024 |
| | | | | KR | 10-2686803 | B1 | 22 July 2024 |
| | | | | US | 2023-0121815 | A1 | 20 April 2023 |
| | | | | WO | 2023-063787 | A1 | 20 April 2023 |
| KR | 10-2011-0002490 | A | 07 January 2011 | CN | 102165631 | A | 24 August 2011 |
| | | | | EP | 2393147 | A1 | 07 December 2011 |
| | | | | KR | 10-1236069 | B1 | 22 February 2013 |
| | | | | US | 2011-0151296 | A1 | 23 June 2011 |
| | | | | WO | 2010-086910 | A1 | 05 August 2010 |
| KR | 10-2017-0044322 | A | 25 April 2017 | None | | | |
| JP | 6227168 | B1 | 08 November 2017 | WO | 2017-138116 | A1 | 17 August 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230119329
- KR 1020240081471